# EUROPÄISCHE PATENTSCHRIFT

(11) **EP 1 041 295 B1**
(45) Veröffentlichungstag und Bekanntmachung des Hinweises auf die Patenterteilung: **15.09.2004**
(21) Anmeldenummer: 00102833.1
(22) Anmeldetag: 11.02.2000
(51) Int. Cl.: F16B 7/18, F16B 7/04

(54) **Trageinrichtung**
Supporting device
Dispositif de support

(30) Priorität: 27.03.1999 DE 29905687 U
(43) Veröffentlichungstag der Anmeldung: 04.10.2000
(73) Patentinhaber: DE-STA-CO Metallerzeugnisse GmbH, D-61449 Steinbach/Ts. (DE)
(72) Erfinder: Schauss, Peter, 65439 Flörsheim (DE); Born-Fuchs, Wilhelm, 65719 Hofheim/Wallau (DE)
(74) Vertreter: Wolf, Günter, Dipl.-Ing.

(56) Entgegenhaltungen:
- US-A- 5 269 486
- US-A- 5 785 359

## Beschreibung

Die Erfindung betrifft eine Trageinrichtung, insbesondere zur Anbringung an Roboterarmen und für die Anbindung von Werkzeugen, wie Spann-, Greif-, Saugeinrichtungen und sonstigen Hilfsmitteln, wie Ventilen, Sensoren oder dgl., bestehend aus mindestens zwei Stangen, die durch stangenprofilangepaßte, mindestens zweiteilige Klemmstücke lösbar miteinander verbindbar sind, wobei die Stangen mit mindestens einer hinterschnittenen Nut versehen sind.

Eine derartige Trageinrichtung ist aus der US 5 785 359 A bekannt. Ähnlich ausgebildete Gestellbausystem sind aus der DE 28 06 557 A1, der GB 2 275 737 A und der DE 37 36 266 A1 bekannt.

Solche Trageinrichtungen bzw. Gestellbausysteme kommen insbesondere, und zwar heute in der Regel in Anbindung an Roboterarmen für den Transport von Werkstükken (bspw. Blechzuschnitten) von einer Bearbeitungsstelle zu einer anderen zur Verwendung. Dabei ist auch ein möglichst maßgenaues Aufnehmen und Absetzen der Werkstücke eine wesentliche Forderung, und zwar neben der Variabilität solcher Einrichtungen, um sie an die örtlichen Gegebenheiten und die jeweils speziellen Werkstücke anpassen zu können, aber auch um speziellen Raumorientierungen der Werkstücke zu genügen. Diese Forderungen werden von bekannten Einrichtungen dieser Art, soweit bekannt, nur bedingt erfüllt.

Bei solchen Systemen ist es wesentlich, daß die Klemmstükke, egal ob sie zwei Stangen verbinden oder ob sie an den Stangen als Träger für bestimmte Werkzeuge dienen, zueinander genau positioniert sein müssen, und zwar in der Regel ausgehend von einem vorgegebenen Bezugspunkt bspw. eines Roboterarmes, der das ganze Tragsystem trägt und insgesamt in die unterschiedlichsten Stellungen bringen muß. Insbesondere bei Anbindung an einen Roboterarm ist es ausserdem wesentlich, eine einmal einjustierte Stellung der Stangen zueinander und der klemmstücke positionsgenau reproduzieren zu können, was bspw. dann notwendig wird, wenn sich, was durch Gegenfahren an irgendwelche Hindernisse eintreten kann, Versetzungen der vorgegebenen Klemmstückjustierungen einstellen.
Einer solchen genauen Positionierungsforderung und auch deren Reproduzierbarkeit kann mit bekannten Trageinrichtungen dieser Art bislang nur umständlich, zeitaufwendig und nur mehr oder weniger genau Rechnung getragen werden, indem man mit irgendwelchen geeigneten Meßlatten, Zollstöcken, Maßbändern od.dgl. Hilfsmittel die Abstände von geeigneten Kanten oder Rändern der Klemmstücke mißt und diese dann an den Stangen fixiert.

Der Erfindung liegt, ausgehend von einer Trageinrichtung der eingangs genannten Art, die Aufgabe zugrunde, diese dahingehend zu verbessern, daß Positionierungsvorgaben zunächst unabhängig von den Klemmstücken an den Stangen vornehmbar und dann die Klemmstücke orientiert in den eingestellten Positionen plazier- und fixierbar sind.

Diese Aufgabe ist mit einer Trageinrichtung der eingangs genannten Art nach der Erfindung dadurch gelöst, daß in der Nut eine in dieser verspannbare Justierleiste angeordnet ist und sowohl im Klemmstück als auch der Justierleiste zur Aufnahme eines Justierstiftes durch relatives Verschieben von Justierleiste und Klemmstück zum Fluchten bringbare Justierbohrungen angeordnet sind.
Vorteilhafte Weiterbildungen ergeben sich nach den abhängigen Ansprüchen 2 bis 7.

Mit der erfindungsgemäßen Lösung gemäß unabhängigem Patentanspruch 1 sind die gestellten Forderungen erfüllt, da nicht mehr die Klemmstücke selbst positioniert werden müssen sondern die Nutleisten bzw. Nutsteine, was sich weitaus problemloser durchführen läßt, da für die Positionierung deren Justierbohrung zur Verfügung steht. Für die genaue Distanzeinstellung zweier Nutleisten nach Maßvorgabe zueinander wird bspw. ein Maßstab benutzt, der zwei auf erforderliche genaue Distanz eingestellte kleine Kegel aufweist, die in die Justierbohren der Nutleisten genau zentriert einsetzbar sind. Wenn die beiden Nutleisten in dieser Position in ihrer Nut fixiert sind, werden dann die Klemmstücke in etwa entsprechender Position an der betreffenden Stange angesetzt und mit Hilfe des Justierstiftes auf genaue Position gebracht, indem dieser zunächst in die Justierbohrung des Klemmstückes eingeschoben und nach Fluchtung mit der Justierbohrung in der Nutleiste auch in diese eingeschoben wird. Vorteilhaft ist dabei das einzuschiebende Ende des Justierstiftes etwas konisch ausgebildet. Es kann aber bspw. auch der Rand der Justierbohrung in der Nutleiste etwas konisch angefast sein, was noch näher erläutert wird. Nach justierter Zuordnung der Klemmstücke zur jeweiligen Nutleiste werden die Klemmstücke an der Stange fixiert und dann wird der Justierstift wieder gezogen, d.h. entfernt.
Auf diese Weise ist nicht nur eine exakte Positionierung der Klemmstücke komplikationslos ermöglicht, sondern diese genaue Positionierung ist auch bei Bedarf ohne Nachmessungen reproduzierbar, da ja die Nutleisten in den Nuten der Stangen genau positioniert und fixiert verbleiben, und zwar selbst dann, wenn sich, aus welchen Gründen auch immer, die Klemmstücke versetzt haben sollten.

Die erfindungsgemäße Trageinrichtung und vorteilhafte Weiterbildungen werden nachfolgend an Hand der zeichnerischen Darstellung von Ausführungsbeispielen näher erläutert.

Es zeigt
- Fig.1: perspektivisch und im Teilschnitt eine Tragstange mit daran angeordnetem Klemmstück;
- Fig.2: im Prinzip und in Draufsicht zwei sich kreuzende Tragstangen mit Klemmstücken und zugehörigem Positionierungshilfselementen;
- Fig.3: ein Klemmstück mit zwei von diesem gehaltenen, sich kreuzenden Tragstangen;
- Fig.4: perspektivisch ein Klemmstück in besonderer Ausführungsform mit zugehöriger Tragstange;
- Fig.5: im Schnitt und vergrößert eine weitere besondere Ausführungsform und
- Fig.6: perspektivisch ein Ausführungsbeispiel einer Trageinrichtung in Anordnung am Ende eines Roboterarmes.

Die Trageinrichtung besteht nach wie vor aus mindestens zwei Tragstangen 1, die durch stangenprofilangepaßte, mindstens zweiteilige Klemmstücke 2 lösbar miteinander verbindbar sind. Die Tragstangen 1 sind dabei mit mindestens einer hinterschnittenen Nut 3 versehen. In sämtlichen nachfolgend im einzelnen zu beschreibenden Ausführungsbeispielen sind die Tragstangen als achteckige Hohlprofile mit teilweise vier und acht Nuten 3 dargestellt, was jedoch nicht verbindlich ist, d.h., es kommen auch andere Profilquerschnitte für die Tragstangen 1 in Betracht.

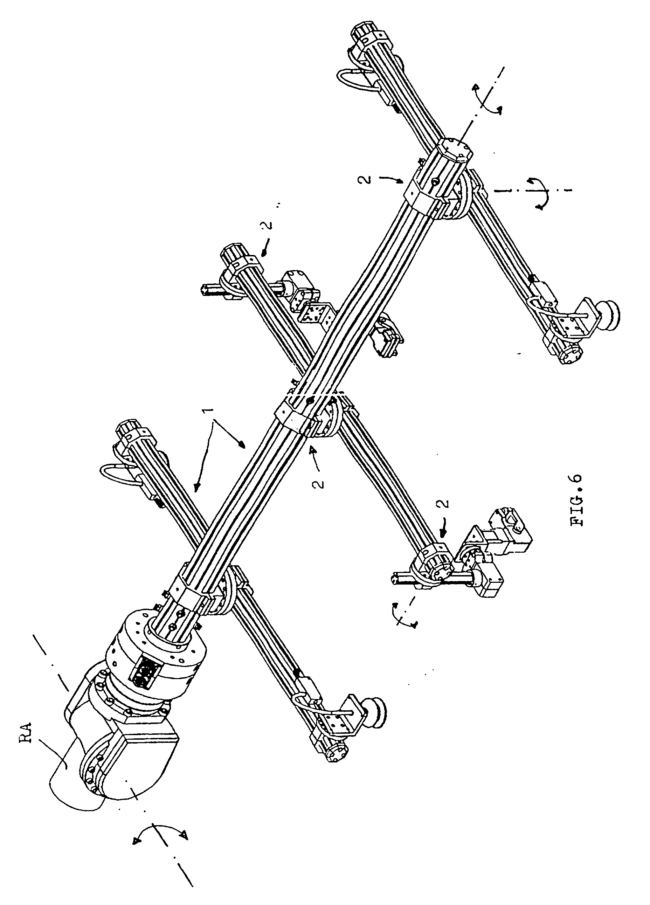

In Fig. 6 ist das Ausführungsbeispiel einer solchen Trageinrichtung aus insgesamt vier Tragstangen 1 mit den daran fixierten Klemmstücken 2 in Anordnung an einem Roboterarm RA und in Gesamtdarstellung verdeutlicht.

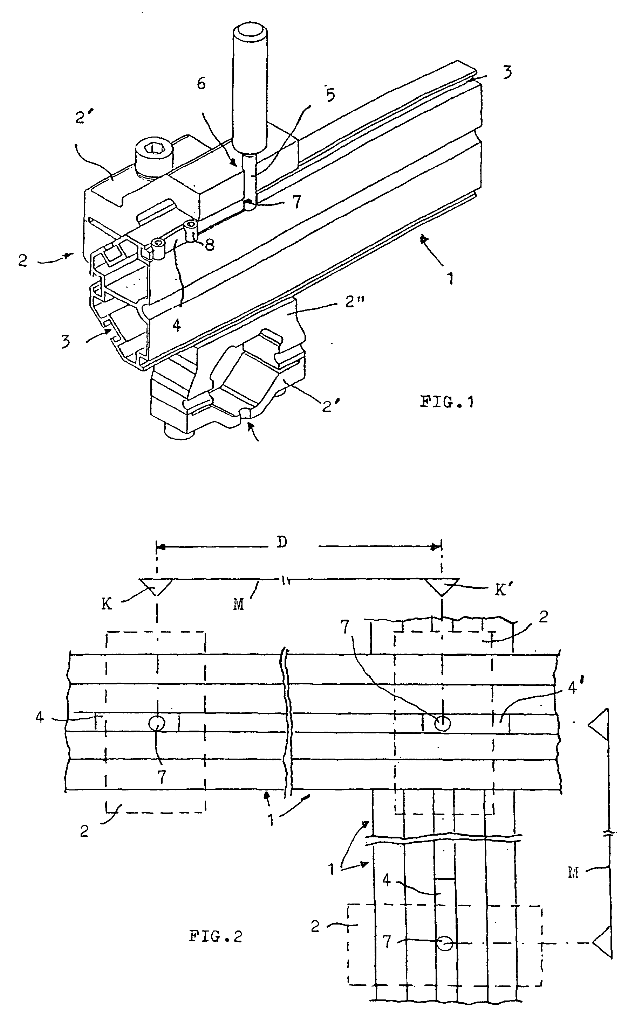

Für eine solche Trageinrichtung ist nun insbesondere unter Verweis auf Fig.1 bzgl. der Klemmstücke und deren genauen Positionierung wesentlich, daß in der Nut 3 eine in dieser verspannbare Justierleiste 4 angeordnet und sowohl im Klemmstück 2 als auch der Justierleiste 4 zur Aufnahme eines Justierstiftes 5 durch relatives Verschieben von Justierleiste 4 und Klemmstück 2 zum Fluchten bringbare Justierbohrungen 6,7 angeordnet sind.

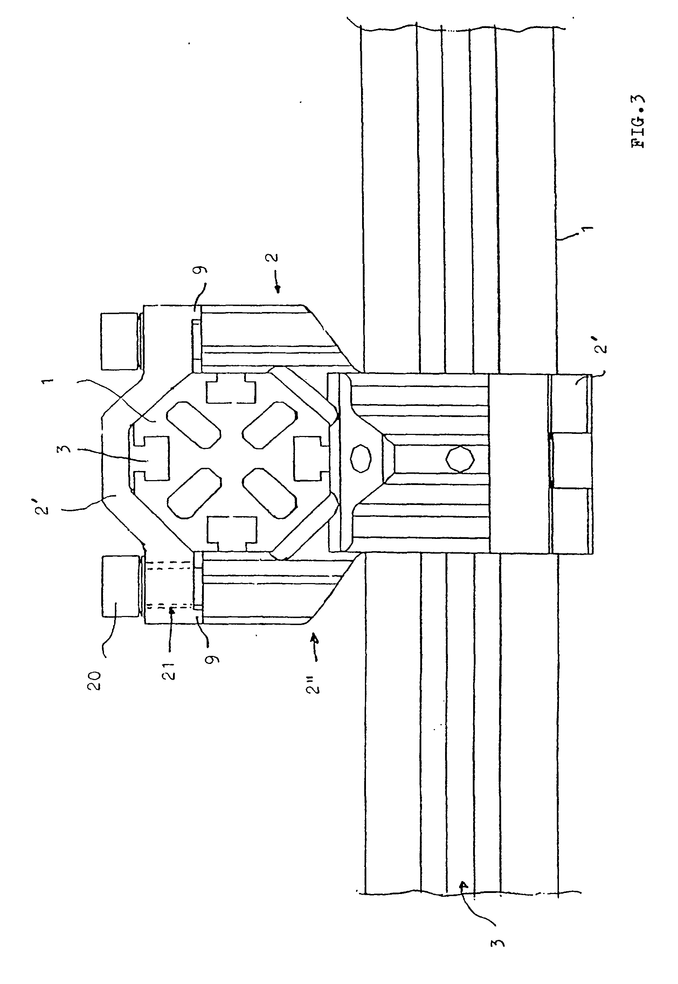

Wie man zur Positionierung vorgeht, ist prinzipiell in Fig.2 veranschaulicht. Je nachdem wieviele Klemmstücke 2 an einer Tragstange 1 anzuordnen und zu fixieren sind, wird eine entsprechende Anzahl von Justierleisten 4 in die betreffende Nut 3 eingeschoben. Bezogen bspw. auf das Ende einer Tragstange 1 als Bezugspunkt wird die erste Justierleiste 4 so in der Nut 3 verspannt, daß deren Justierbohrung 7 mit ihrer Mitte exakt die gewünschte und bspw. per Zeichnung vorgegebene Distanz zum Stangenende hat. Für die Positionierung der zweiten Justierleiste 4' wird dann der Maßstab M mit einem seiner kleinen Kegel K auf bzw. in die Justierbohrung 7 der bereits fixierten Justierleite 4 eingesetzt, d.h., durch die Kegelform genau zentrisch, und die zweite Justierleiste 4' wird mit ihrer Justierbohrung 7 unter den zweiten Kegel K' des Maßstabes M geschoben, der auf die geforderte Distanz D am Maßstab fixiert ist. Beim Einsetzen des Kegels K' in die Justierbohrung 7 erhalten somit beide Justierbohrungen exakt die geforderte Distanz D, wonach auch die zweite Justierleiste 4 fixiert bzw. in der Nut verspannt wird. Für diese Fixierung sind die Justierleisten 4, wie bspw. in Fig.1,2 dargestellt, mit zwei Gewindebohrungen mit darin angeordneten Madenschrauben 8 versehen. Diese Postionierungen werden für alle Stellen an allen Stangen einer Trageinrichtung durchgeführt, an denen Klemmstücke 2 zu plazieren sind.

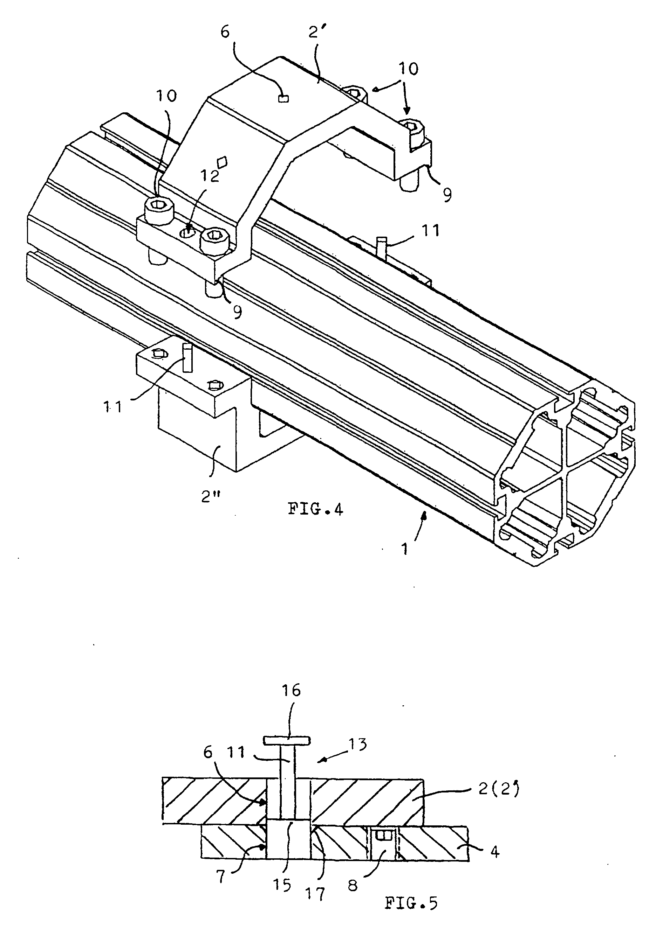

Ist dies geschehen, werden die Klemmstücke 2 an den Stangen 1 angesetzt und zunächst nur locker verschraubt, so daß sie auf den Stangen 1 noch verschiebbar sind. Die Klemmstücke 2, die, je nachdem welche Funktion sie haben, zweiteilig (siehe Fig.4) oder dreiteilig (siehe Fig.3) sind, werden nach Augenmaß nun so über die positionierten Justierleisten 4 verschoben, daß ihre Justierbohrungen 6 in etwa mit den Justierbohrungen 7 der Justierleisten 4 fluchten. Zum exakten Fluchten dieser Bohrungen 6,7 wird der Justierstift 5 eingeschoben, wodurch auch das jeweilige Klemmstück 2 seine exakte Positionierung erhält. Bei noch eingestecktem Justierstift 5 wird dann das jeweilige Klemmstück 2 an der betreffenden Stange 1 mit Schrauben 20 (siehe Fig .3) festgespannt. Nach abgeschlossener Positionierung eines Klemmstückes 2 wird der Justierstift 5 natürlich entfernt.
Da die per Verschraubung festzuspannenden Klemmstückteile 2' Durchgangsbohrungen 21 (Fig.3) mit einem etwas größeren Durchmesser als die Schrauben 20 haben müssen, ergibt sich an diesen Stellen ein gewisses Spiel.
Um auch diesem Spiel für eine genaue Positionierung der Klemmstücke 2 Rechnung zu tragen, ist vorteilhaft unter Verweis auf Fig.4 vorgesehen, daß das die Justierbohrung 6 aufweisende Klemmstückteil 2' in Form eines mit Randabstützungen 9 versehenen Bügels ausgebildet und dieser an jedem Ende mit zwei Schrauben 10 am anderen Klemmstückteil 2'' fixiert ist, wobei zwischen den Schrauben 10 im einen oder anderen Klemmstückteil 2',2'' fluchtend zu einem Paßstift 11 im jeweils anderen Klemmstückteil 2',2'' ein in Bügelerstreckung weisendes Paßlangloch 12 angeordnet ist, in das der Paßstift 11 eingreift.
Paßstift 11 und Paßlangloch 12 sorgen dabei für eine mittige Zuordnung der Klemmstückteile 2',2'' zueinander, wobei die Ausbildung eines Langloches 12 folgende Bedeutung hat: Insbesonders bei der Verwendung solcher Trageinrichtungen an Robotern besteht für die Fixierung der Klemmstücke 2 an ihren Stangen 1 die Forderung, daß diese einerseits ausreichend festsitzen, andererseits aber in Kollisionsfällen sich doch etwas verschieben können müssen. Dem wird durch die oben definierte Ausbildung der Klemmstückteile 2' mit Randabstützungen 9 Rechnung getragen, wodurch der Bügel etwas elastisch wird. Dies wiederum führt dazu, daß sich der Bügel beim Festschrauben verbiegt. Dieser Verbiegung trägt das vorgesehene Langloch 12 Rechnung, das ja nur eine Seitenführungsfunktion für den Paßstift 11 hat.

Eine vorteilhafte Weiterbildung besteht unter Verweis auf Fig. 5 darin, daß in den per se vorhandenen Justierbohrungen 6,7 ein sogenannter Kontrollstift 13 aus leicht abscherbarem Material angeordnet ist, der aus der Justierbohrung 6 des Klemmstückes 2 bzw. der Klemmstückteile 2' herausragt.
Damit ist eine permanente Sichtkontrolle für die ordnungsgemäß aufrechterhaltene richtige Positionierung des jeweiligen Klemmstückes gegeben. Der Kontrollstift 13 ist dabei in seinem die Justierbohrung 6 des Klemmstückteiles 2' durchgreifenden Teil 14 bis auf einen Abscherteil 15 mit einem in Bezug auf die Justierbohrung 6 reduzierten Durchmesser versehen. Ein bspw. durch äußere Einwirkung oder Lockerung der Verschraubung am Klemmstück 2 bedingter Versatz an seiner Tragstange 1, an dem die Justierleiste 4 und damit deren Justierbohrung 7 nicht teilnimmt, weil diese fest verspannt in der Nut 3 sitzt, führt zu einer Abscherung oder zumindest Schrägstellung des herausragenden Teiles des Kontrollstiftes 13, womit erkennbar wird, daß ein Versatz des Klemmstückes vorliegt. Vorteilhaft ist dafür der Kontrollstift 13 andersfarbig als das ihn aufnehmende Klemmteil 2 ausgestaltet (bspw. rot eingefärbt), und ferner kann der Kontrollstift 13 an seinem herausragenden Ende mit einer von seiner Stiftform abweichenden Formgebung 16 versehen sein, wie dies ebenfalls in Fig.5 mit dargestellt ist.
In Fig.5 ist im übrigen auch die einleitend vorerwähnte Anfasung 17 der Justierbohrung 7 in der Justierleiste 4 mit dargestellt. Eine solche Anfasung kann auch, sofern der Justierstift 5 nicht selbst angefast sein sollte, auch an der Justierbohrung 6 vorgesehen werden.

## Patentansprüche

1. Trageinrichtung, insbesondere zur Anbringung an Roboterarmen und für die Anbindung von Werkzeugen, wie Spann-,Greif-,Saugeinrichtungen und sonstigen Hilfsmitteln, wie Ventilen, Sensoren oder dgl.,
bestehend aus mindestens zwei Stangen (1), die durch stangenprofilangepaßte, mindestens zweiteilige Klemmstücke (2) lösbar miteinander verbindbar sind, wobei die Stangen (1) mit mindestens einer hinterschnittenen Nut (3) versehen sind,
**dadurch gekennzeichnet,**
**daß** in der Nut (3) eine in dieser verspannbare Justierleiste (4) angeordnet und sowohl im Klemmstück (2) als auch der Justierleiste (4) zur Aufnahme eines Justierstiftes (5) durch relatives Verschieben von Justierleiste (4) und Klemmstück (2) zum Fluchten bringbare Justierbohrungen (6,7) angeordnet sind.

2. Trageinrichtung nach Anspruch 1,
**dadurch gekennzeichnet,**
**daß** die Justierleiste (4) mit mindestens einer Gewindebohrung mit einer darin angeordneten Madenschraube (8) für das Festspannen der Justierleiste (4) in der Nut (3) versehen ist.

3. Trageinrichtung nach Anspruch 1 oder 2,
**dadurch gekennzeichnet,**
**daß** das die Justierbohrung (6) aufweisende Klemmstückteil (2') in Form eines mit Randabstützungen (9) versehenen Bügels ausgebildet und dieser an jedem Ende mit zwei Schrauben (10) am anderen Klemmstückteil (2'') fixiert ist, wobei zwischen den Schrauben (10) im einen oder anderen Klemmstückteil (2',2'') fluchtend zu einem Paßstift (11) im jeweils anderen Klemmstückteil (2",2") ein in Bügelerstreckung weisendes Paßlangloch (12) angeordnet ist, in das der Paßstift (11) eingreift.

4. Trageinrichtung nach einem der Ansprüche 1 bis 3,
**dadurch gekennzeichnet,**
**daß** in den Justierbohrungen (6,7) ein Kontrollstift(13) aus leicht abscherbarem Material angeordnet ist, der aus der Justierbohrung (6) des Klemmstückes (2) herausragt.

5. Trageinrichtung nach Anspruch 4,
**dadurch gekennzeichnet,**
**daß** der Kontrollstift (13) in seinem die Justierbohrung (6) des Klemmstückteiles (2'') durchgreifenden Teil (14) bis auf einen Abscherteil (15) mit einem in Bezug auf die Justierbohrung (6) reduzierten Durchmesser versehen ist.

6. Trageinrichtung nach Anspruch 4 oder 5,
**dadurch gekennzeichnet,**
**daß** der Kontrollstift (13) andersfarbig ist als das ihn aufnehmende Klemmteil (2).

7. Trageinrichtung nach einem der Ansprüche 4 bis 6,
**dadurch gekennzeichnet,**
**daß** der Kontrollstift (13) an seinem herausragenden Ende mit einer von seiner Stiftform abweichenden Formgebung (16) versehen ist.

## Claims

1. A carrying device that is mounted, in particular, on robot arms and serves for attaching tools, e.g., clamping tools, gripping tools, suction tools and other auxiliary means such as valves, sensors or the like, wherein said carrying device consists of at least two rods (1) that are separably connected to one another by means of clamping elements (2) that are adapted to the rod profile and consist of at least two parts, and wherein the rods (1) are provided with at least one undercut groove (3),
**characterized in that**
a checking strip (4) is arranged and can be fixed in the groove (3), and **in that** adjusting bores (6, 7) for accommodating an adjusting pin (5) are arranged in the clamping element (2) as well as in the checking strip (4), wherein said adjusting bores (6, 7) can be aligned by means of a relative displacement between the checking strip (4) and the clamping element (2).

2. The carrying device according to Claim 1,
**characterized in that**
the checking strip (4) is provided with at least one threaded bore with a set screw (8) arranged therein in order to fix the checking strip (4) in the groove (3).

3. The carrying device according to Claim 1 or 2,
**characterized in that**
the clamping element part (2') containing the adjusting bore (6) is realized in the form of a bow that is provided with edge supports (9) and fixed on the other clamping element part (2") by means of two screws (10) on each end, wherein an oblong alignment hole (12) that points in the direction of the bow is arranged between the screws (10) in one or the other clamping element part (2', 2 ") such that it is aligned with an alignment pin (11) in the respectively other clamping element part (2', 2"), and wherein the alignment pin (11) engages into the oblong alignment hole.

4. The carrying device according to one of Claims 1-3,
**characterized in that**
a control pin (13) of a material that can be easily sheared off is arranged in the adjusting bores (6, 7) such that it protrudes from the adjusting bore (6) in the clamping element (2).

5. The carrying device according to Claim 4,
**characterized in that**,
with the exception of a shear-off section (15), the part (14) of the control pin (13) that extends through the adjusting bore (6) in the clamping element part (2") is realized with a reduced diameter referred to the adjusting bore (6).

6. The carrying device according to Claim 4 or 5,
**characterized in that**
the control pin (13) has a different color than the clamping element (2) that accommodates the control pin.

7. The carrying device according to one of Claims 4-6,
**characterized in that**
the protruding end of the control pin (13) has a shape (16) that differs from its pin shape.

## Revendications

1. Dispositif de support, particulièrement adapté pour approcher des bras d'un robot et pour assembler des outils, comme par exemple des dispositifs de serrage, de préhension et d'aspiration et divers autres éléments, comme par exemple des soupapes, des capteurs, etc. constitué d'au moins deux barres (1), qui peuvent être reliées l'une à l'autre au moyen de pièces de serrage (2) en deux parties, adaptées à la forme des barres, dans lequel les barres (1) sont pourvues d'au moins une nervure (3) située sur la face arrière, **caractérisé en ce qu'**une tige de réglage extensible (4) est disposée à l'intérieur de ladite nervure (3) ainsi que de la pièce de serrage (2) pour introduire une goupille de réglage (5) dans des orifices de réglage (6,7) par le déplacement relatif de la tige de réglage (4) et de la pièce de serrage (2).

2. Dispositif de support selon la revendication 1, **caractérisé en ce que** la tige de réglage (4) est pourvue d'au moins un trou taraudé avec une vis de blocage (8) qui s'engage à l'intérieur de ce dernier, afin de fixer solidement la tige de réglage (4) à l'intérieur de la nervure (3).

3. Dispositif de support selon les revendications 1 ou 2, **caractérisé en ce que** la pièce de serrage (2') qui présente un orifice de réglage (6) est conçue sous la forme d'un étrier (9) pourvu d'appuis sur les côtés et ledit étrier est fixé à l'autre pièce de serrage (2") par chacune de ses extrémités au moyen de deux vis (10), dans lequel un orifice de positionnement (12) situé sur la surface de l'étrier et correspondant à une goupille de positionnement (11) située respectivement sur l'autre pièce de serrage (2', 2 ")est disposé entre les vis (10) sur l'une ou l'autre des pièces de serrage (2', 2"), de manière à recevoir la goupille de positionnement (11).

4. Dispositif de support selon une des revendications 1 à 3, **caractérisé en ce qu'**une goupille de contrôle (13) constituée d'un matériau facilement cisaillable est disposée dans les orifices de réglage (6,7), laquelle goupille de contrôle se dresse à l'extérieur de l'orifice de réglage (6) de la pièce de serrage (2).

5. Dispositif selon la revendication 4, **caractérisé en ce que** la goupille de contrôle (13) est pourvue sur sa partie (14) qui traverse l'orifice de réglage (6) de la pièce de serrage (2) d'une partie cisaillable (15) dont le diamètre peut être réduit de manière à s'emboîter parfaitement dans l'orifice de réglage (6).

6. Dispositif de support selon les revendications 4 ou 5, **caractérisé en ce que** la goupille de contrôle (13) est d'une couleur différente de la pièce de serrage (2) qu'elle traverse.

7. Dispositif de support selon une des revendications 4 à 6, **caractérisé en ce que** la goupille de contrôle (13) est pourvue, au niveau de son extrémité qui se dresse vers l'extérieur, d'une pastille (16) dont la forme diffère de la forme de la goupille.
